# FASCICULE DE BREVET EUROPEEN

(11) **EP 2 141 426 B1**
(45) Date de publication et mention de la délivrance du brevet: **07.08.2019**
(21) Numéro de dépôt: 09164383.3
(22) Date de dépôt: 02.07.2009
(51) Int. Cl.: B60H 1/00, F25B 9/00, F25B 49/00

(54) **Méthode d'utilisation d'une boucle de climatisation constitutive d'une installation de ventilation, de chauffage et/ou de climatisation d'un véhicule automobile**
Verfahren zur Anwendung eines Klimakreislaufs für ein Lüftungs-, Heizungs- und / oder Klimatisierungssystem eines Kraftfahrzeuges
Method for the implementation of an AC loop of an heating, ventilating and/or air conditioning installation of a vehicle

(30) Priorité: 02.07.2008 FR 0803754
(43) Date de publication de la demande: 06.01.2010
(73) Titulaire: Valeo Systèmes Thermiques, 78320 Le Mesnil Saint Denis (FR)
(72) Inventeur: Benouali, Jugurtha, 92140 Clamart (FR); Liu, Jin-Ming, 78770 Conflans Saint Honorine (FR)
(74) Mandataire: Metz, Gaëlle

(56) Documents cités:
- EP-A- 1 598 616
- WO-A-2008/016227
- WO-A-2008/026115
- DE-A1-102006 019 082
- FR-A- 2 781 197
- US-A- 4 941 325
- US-A1- 2007 125 106
- US-A1- 2007 157 649
- US-B1- 6 182 455

## Description

### Domaine technique de l'invention.

La présente invention est du domaine des installations de ventilation, de chauffage et/ou de climatisation, notamment d'un véhicule automobile. Elle a pour objet une méthode d'utilisation d'une boucle de climatisation constitutive d'une telle installation.

### Etat de la technique.

Un véhicule automobile est couramment équipé d'une installation de ventilation, de chauffage et/ou de climatisation pour réguler les paramètres aérothermiques de l'air contenu à l'intérieur de l'habitacle du véhicule. Une telle installation comporte une boucle de climatisation pour refroidir un flux d'air préalablement à sa délivrance à l'intérieur de l'habitacle. Ladite boucle comprend une pluralité d'éléments à l'intérieur desquels circule successivement un fluide réfrigérant, tel qu'un fluide supercritique, dioxyde de carbone notamment connu sous la référence R744. Ces éléments comprennent au moins un compresseur, un refroidisseur de gaz, éventuellement un échangeur de chaleur interne, un organe de détente, un évaporateur et éventuellement un accumulateur.

Le document DE 102006019082 A1 divulgue une méthode d'utilisation d'une boucle de climatisation suivant le préambule de la revendication 1.

Dans le cas courant où la boucle de climatisation comprend un échangeur de chaleur interne et un accumulateur, le fluide réfrigérant circule depuis le compresseur vers le refroidisseur de gaz, puis vers une première branche de l'échangeur de chaleur interne, puis vers l'organe de détente, ensuite vers l'évaporateur, puis vers l'accumulateur, et enfin vers une deuxième branche de l'échangeur de chaleur interne, pour retourner au compresseur.

Les éléments susvisés sont placés à l'intérieur d'un compartiment moteur du véhicule qui est prévu pour recevoir le moteur du véhicule. Le fonctionnement dudit moteur réchauffe l'air présent à l'intérieur du compartiment moteur, ce qui tend à augmenter la température du fluide réfrigérant circulant à l'intérieur de la boucle de climatisation. Un tel échauffement du fluide réfrigérant est également susceptible de survenir après l'arrêt du moteur du véhicule, en raison de l'inertie thermique de ce dernier. Le fluide réfrigérant étant un fluide supercritique, l'augmentation de sa température induit un accroissement de sa pression à la fois du côté haute pression mais aussi du côté basse pression car lorsque la boucle est arrêtée, un équilibre de pression se met en place. A la remise en fonctionnement de la boucle, la pression est alors susceptible d'excéder une pression de sécurité, au-dessus de laquelle il est risqué de mettre en marche le compresseur, et consécutivement ladite boucle de climatisation, ce qui génère une gêne pour l'utilisateur du véhicule lorsque ce dernier souhaite remettre en fonctionnement l'installation de climatisation. Cette gêne se traduit par des mises en route et des arrêts successifs du compresseur (cyclage du compresseur), et corrélativement des à-coups du moteur.

La présente invention vient améliorer la situation.

### Objet de l'invention.

Le but de la présente invention est de proposer une méthode d'utilisation d'une boucle de climatisation constitutive d'une installation de ventilation, de chauffage et/ou de climatisation d'un véhicule automobile, cette méthode étant simple à mettre en oeuvre, à partir de l'utilisation d'organes courants d'une telle boucle de climatisation, cette méthode permettant néanmoins de mettre en marche la boucle de climatisation, y compris dans des conditions où la pression de fluide réfrigérant à l'intérieur de la boucle de climatisation excède une pression de sécurité Ps, sans pour autant faire encourir à ladite boucle des risques de détérioration.

La méthode de la présente invention est une méthode d'utilisation d'une boucle de climatisation constitutive d'une installation de ventilation, de chauffage et/ou de climatisation d'un véhicule automobile. Ladite boucle comprend au moins un compresseur et un refroidisseur de gaz à l'intérieur desquels circule un fluide réfrigérant. Le refroidisseur de gaz est pourvu d'au moins un groupe moto-ventilateur.

Selon la présente invention, ladite méthode comprend des étapes successives consistant à :
- mesurer une première pression P1 du fluide réfrigérant à l'intérieur de la boucle de climatisation, puis
- comparer ladite première pression P1 à une pression de sécurité Ps, puis
- mettre en marche le groupe moto-ventilateur pendant une période de durée D préalablement à une mise en marche du compresseur, si la première pression P1 du fluide réfrigérant est supérieure à la pression de sécurité Ps.

La mise en marche du groupe moto-ventilateur préalablement à celle du compresseur permet de faire baisser la pression du fluide réfrigérant à l'intérieur de la boucle de climatisation jusqu'à ce que cette dernière soit inférieure à la pression de sécurité Ps. Dans ces conditions, le compresseur peut être mis en marche sans risque de détérioration de la boucle de climatisation.

Les concepteurs de la présente invention ont fait le choix d'utiliser le groupe moto-ventilateur associé au refroidisseur de gaz, pour faire baisser la pression de fluide réfrigérant à l'intérieur de la boucle de climatisation. Ainsi, la méthode de la présente invention ne nécessite pas d'équiper la boucle de climatisation d'éléments supplémentaires, qui augmenteraient de manière préjudiciable le coût et l'encombrement de ladite boucle. Il en ressort finalement que la méthode de la présente invention permet à moindre coût de mettre en oeuvre la boucle de climatisation, y compris après un arrêt récent du moteur du véhicule, par exemple de l'ordre de quelques minutes, où il est habituellement impossible de mettre en marche ladite boucle en raison de l'inertie thermique du moteur du véhicule. Il en découle finalement une augmentation des conditions d'utilisation de la boucle de climatisation, pour garantir un confort thermique à l'utilisateur du véhicule.

Selon la présente invention, la mise en oeuvre de la boucle de climatisation est commandée par une unité de contrôle électronique de mise en marche d'un moteur du véhicule, la mesure de la pression P1 est réalisée dès que ladite unité est mise sous tension électrique.

Selon la présente invention, la mise en marche du groupe moto-ventilateur est réalisée préalablement à une mise en marche dudit moteur.

Cette mise en fonctionnement du groupe moto-ventilateur préalable à la mise en marche du moteur est réalisée par exemple par détection de présence de la clé électronique commandant le véhicule. En effet, le véhicule est équipé de moyen de détection et de reconnaissance de la clé dans un périmètre entourant le véhicule. Dès que cette reconnaissance est opérée, une information est envoyée à l'unité de contrôle électronique de mise en marche du moteur pour autoriser la mise en fonctionnement de la méthode revendiquée. Avec cette variante, on met en fonctionnement le groupe moto-ventilateur avant que l'utilisateur ne rejoigne son véhicule, ce qui permet de diminuer le temps d'indisponibilité de l'installation de climatisation quand l'utilisateur à démarrer son véhicule.

Selon une deuxième variante de réalisation, la mise en marche du groupe moto-ventilateur est arrêtée lors de la mise en marche dudit moteur, plus précisément pendant la phase d'actionnement du démarreur du moteur thermique du véhicule. Ces dispositions visent à éviter une consommation électrique excessive générée par la mise en oeuvre simultanée du groupe moto-ventilateur et d'un démarreur du véhicule.

Selon une troisième variante de réalisation, la mise en marche du groupe moto-ventilateur est réalisée postérieurement à la mise en marche dudit moteur.

Ladite pression de sécurité Ps est avantageusement comprise entre 8 MPa et 9 MPa car c'est la limite maximum au-delà de laquelle à la mise en fonctionnement de la boucle le compresseur va cycler.

Préférentiellement, la pression de sécurité est de l'ordre de 9 MPa.

La dite durée D est avantageusement inférieure à 30 s.

Préférentiellement, ladite durée D est de l'ordre de 15 s.

A l'issue de la durée D, ladite méthode comprend avantageusement une étape de mesure de la pression P de fluide réfrigérant à l'intérieur de la boucle de climatisation (après la durée D, et qui sera notée P2 - la mesure est effectuée avec le même capteur). Ladite étape de mesure est préalable à la mise en oeuvre de la boucle de climatisation, qui comprend un évaporateur traversé par de l'air mis en mouvement par un pulseur associé faisant partie de l'installation de climatisation.

Si la pression P2 excède la pression de sécurité Ps, la boucle de climatisation est mise en oeuvre soit en maintenant à l'arrêt ledit pulseur pendant une durée prédéterminée (si une sonde évaporateur est insérée dans l'évaporateur, cette durée dépendra du niveau de température atteint par ladite sonde), soit avec une mise en marche du pulseur à un régime réduit.

### Description des figures.

La présente invention sera mieux comprise, et des détails en relevant apparaîtront, à la lecture de la description qui va être faite de variantes de réalisation en relation avec les figures des planches annexées, dans lesquelles :
La fig.1 est une vue schématique d'une boucle de climatisation mise en oeuvre selon une méthode de la présente invention.
La fig.2 est un schéma illustrant la pression du fluide réfrigérant à l'intérieur de la boucle de climatisation en fonction du temps, lors de la mise en oeuvre de la présente invention.
Les fig.3 à fig.5 sont des illustrations schématiques de trois variantes respectives de mise en oeuvre de la méthode de la présente invention.

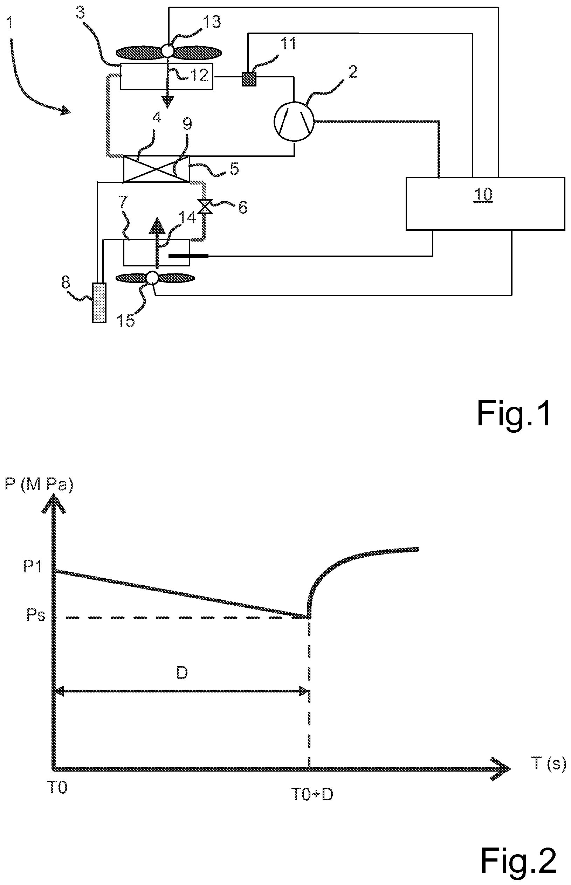

Sur la fig.1, un véhicule automobile est équipé d'une installation de ventilation, de chauffage et/ou de climatisation pour réguler les paramètres aérothermiques de l'air contenu à l'intérieur de l'habitacle du véhicule. L'installation comporte une boucle de climatisation 1 pour refroidir un flux d'air préalablement à sa délivrance à l'intérieur de l'habitacle. La boucle de climatisation 1 comprend une pluralité d'éléments 2,3,5,6,7,8 à l'intérieur desquels circule un fluide réfrigérant supercritique, dioxyde de carbone notamment, référencé R744.

Le fluide réfrigérant circule depuis un compresseur 2 vers un refroidisseur de gaz 3, puis vers une première branche 4 d'un échangeur de chaleur interne 5, puis vers l'organe de détente 6, ensuite vers un évaporateur 7, puis vers un accumulateur 8, et enfin vers une deuxième branche 9 de l'échangeur de chaleur interne 5, pour retourner au compresseur 2.

Le compresseur 2 est destiné à recevoir le fluide réfrigérant à l'état gazeux et à le comprimer pour le porter à haute pression. Le compresseur 2 est en relation avec une unité de contrôle électronique 10 qui commande sa mise en oeuvre. Ladite unité 10 est en relation avec un capteur 11 de pression et/ou de température du fluide réfrigérant placé sur la boucle de climatisation 1, par exemple entre le compresseur 2 et le refroidisseur de gaz 3. En pratique, ce capteur est léché par le fluide réfrigérant et est localisé soit à la sortie du compresseur, soit sur la conduite placée entre le compresseur 2 et le refroidisseur de gaz 3, soit à l'entrée de ce dernier. Si le capteur 11 est un capteur de température, ladite unité 10 est apte à en déduire une pression correspondante. Dans le cas où la pression mesurée et/ou déduite est supérieure à une pression de sécurité Ps, couramment comprise entre 8 MPa et 9 MPa, et préférentiellement de l'ordre de 9 MPa, l'unité de contrôle électronique 10 interdit la mise en oeuvre du compresseur 2, et en conséquence celle de ladite boucle 1.

Le refroidisseur de gaz 3 est apte à refroidir le fluide réfrigérant comprimé, à pression relativement constante, en cédant de la chaleur à un premier flux d'air 12. A cet effet, la boucle de climatisation 1 coopère avec au moins un groupe moto-ventilateur 13, couramment placé à l'avant du véhicule, pour générer le premier flux d'air 12 et faire circuler ce dernier 12 à travers le refroidisseur de gaz 3. La mise en oeuvre du groupe moto-ventilateur 13 est également contrôlée par ladite unité de contrôle 10. Le groupe moto-ventilateur 13 comprend un premier organe d'entraînement, notamment un moteur électrique, pour la mise en rotation d'au moins une hélice apte à générer le premier flux d'air 12.

L'échangeur de chaleur interne 5 est configuré de manière à ce que le fluide réfrigérant circulant à l'intérieur de la première branche 4 puisse céder de la chaleur au fluide réfrigérant circulant à l'intérieur de la deuxième branche 9. A cet effet, le fluide réfrigérant circule en sens opposé à l'intérieur de la première branche 4 et de la deuxième branche 9.

L'organe de détente 6 est à même d'abaisser la pression du fluide réfrigérant en sortie de l'échangeur de chaleur interne 5 selon la branche 4 en l'amenant au moins en partie à l'état liquide ou diphasique.

L'évaporateur 7 est quant à lui propre à faire passer à l'état gazeux le fluide réfrigérant à l'état liquide ou diphasique provenant de l'organe de détente 6, à pression relativement constante, en prélevant de la chaleur à un deuxième flux d'air 14 qui traverse l'évaporateur 7. A cet effet, la boucle de climatisation 1 coopère via l'évaporateur 7 avec un pulseur 15 pour générer le deuxième flux d'air 14 et faire circuler ce dernier 14 à travers l'évaporateur 7 pour finalement l'introduire dans l'habitacle du véhicule et le climatiser selon la demande de l'utilisateur. La mise en oeuvre du pulseur 15 est également contrôlée à partir d'une information en provenance de ladite unité de contrôle 10. Le pulseur est classiquement constitué d'une turbine radiale en forme de cage d'écureuil mise en mouvement par moteur électrique pour générer le deuxième flux d'air 14.

L'accumulateur 8 est destiné à recueillir un reliquat de fluide réfrigérant à l'état liquide en sortie de l'évaporateur 7, de telle sorte que seul le fluide réfrigérant à l'état gazeux traverse l'échangeur de chaleur interne selon la branche 9.

La présente invention propose une méthode de mise en oeuvre de ladite boucle 1, qui vise à faire décroître la pression de fluide réfrigérant en dessous de la pression de sécurité Ps pour permettre la mise en marche de ladite boucle 1. Dans sa généralité, la présente invention propose de mettre en oeuvre le groupe moto-ventilateur 13 préalablement à la mis en oeuvre du compresseur 2 de ladite boucle 1. La mise en oeuvre du groupe moto-ventilateur 13 vise à refroidir le fluide réfrigérant, ce qui induit une diminution de sa pression jusqu'à ce que cette dernière devienne inférieure à la pression de sécurité Ps.

Plus particulièrement, la méthode de la présente invention comprend les étapes successives consistant à :
- mesurer une première pression P1 du fluide réfrigérant à l'intérieur de la boucle de climatisation 1, puis
- comparer ladite première pression P1 à la pression de sécurité Ps, puis
- mettre en marche le groupe moto-ventilateur 13 pendant une période de durée D préalablement à une mise en marche du compresseur 2, si la première pression P1 du fluide réfrigérant est supérieure à la pression de sécurité Ps.

Sur la fig.2, la pression P du fluide réfrigérant à l'intérieur de la boucle de climatisation 1 est représentée en fonction du temps T. A l'instant TO, l'utilisateur du véhicule provoque la mise sous tension électrique de l'unité de contrôle électronique 10, notamment à partir d'une insertion d'une clef de contact à l'intérieur d'un démarreur dont est pourvu le véhicule ou à partir d'une démarche analogue. En variante, cette mise sous tension de l'unité de contrôle peut être effectuée par détection et reconnaissance de la clé électronique commandant l'ouverture centralisée et le démarrage du véhicule. La mise sous tension électrique de ladite unité 10 provoque immédiatement la mesure de la première pression P1 et sa comparaison avec la pression de sécurité Ps. Dans le cas représenté sur la fig.2, où la première pression mesurée P1 est supérieure à la pression Ps, la boucle de climatisation 1 ne peut être normalement démarrée. L'unité de contrôle 10 commande néanmoins la mise en oeuvre du groupe moto-ventilateur 13 à son régime maximum, correspondant par exemple à une vitesse d'air sur le refroidisseur de gaz comprise entre 1 et 2,5 m/s. La mise en marche du groupe moto-ventilateur 13 est notamment effectuée pendant une période de durée D, qui est de l'ordre de 30 s. Il en résulte un refroidissement du fluide réfrigérant, et donc un abaissement de sa pression, jusqu'à ce que cette dernière devienne inférieure à la pression de sécurité Ps, au plus tard à l'instant T0+D. Dans le cas où la pression du fluide réfrigérant excède encore la pression de sécurité Ps à l'instant T0+D, le compresseur 2 n'est pas démarré par l'unité de contrôle 10.

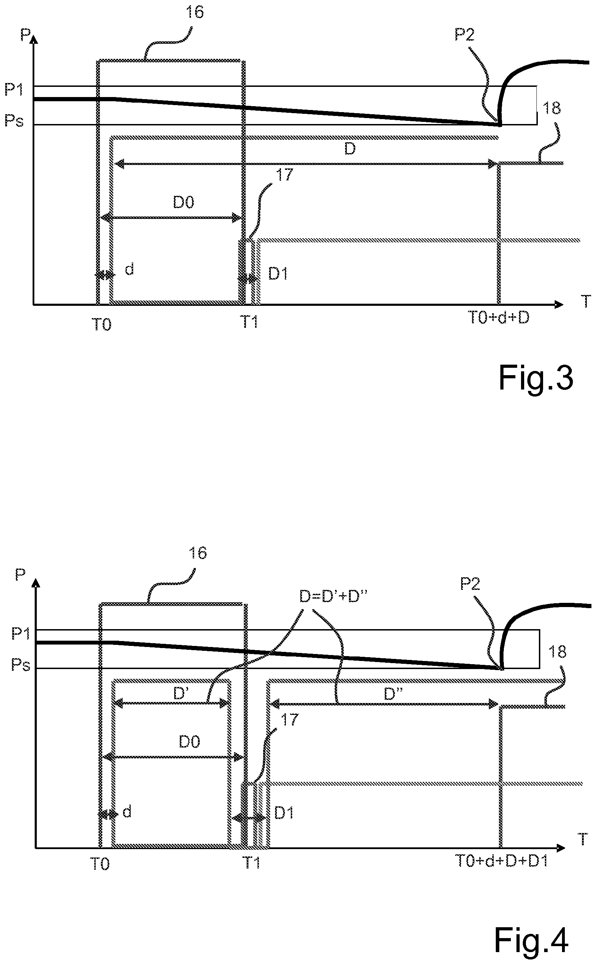

Sur les fig.3 à fig.5, sont illustrées trois variantes respectives de mise en oeuvre de la méthode de la présente invention en fonction du temps T. A l'instant T0, l'utilisateur du véhicule met sous tension électrique l'unité de contrôle 10 pour une étape de démarrage 16 d'une durée D0. A l'instant T1, l'utilisateur actionne un démarreur du véhicule, pour lancer le moteur thermique de ce dernier, au cours d'une période d'allumage 17 d'une durée D1, qui est couramment de l'ordre d'une seconde.

A l'instant T0, l'unité de contrôle 10 mesure la première pression P1 qui s'avère être supérieure à la pression de sécurité Ps. A l'instant T0 + d, l'unité de contrôle 10 provoque la mise en oeuvre du groupe moto-ventilateur 13.

Sur les fig.3 et fig.4 qui illustrent respectivement une première et une deuxième variante de réalisation de la présente invention, la durée d est de l'ordre d'une seconde, de telle sorte que le groupe moto-ventilateur 13 est quasi-immédiatement mis en oeuvre pour une période de durée D.

Sur la fig.4, la période de durée D est constituée de deux périodes élémentaires D' et D" entre lesquelles est interposée la période d'allumage 17, au cours de laquelle la mise en oeuvre du groupe moto-ventilateur 13 est arrêtée pour éviter une consommation électrique trop importante, que provoquerait la mise en oeuvre simultanée du groupe moto-ventilateur 13 et du démarreur du moteur du véhicule.

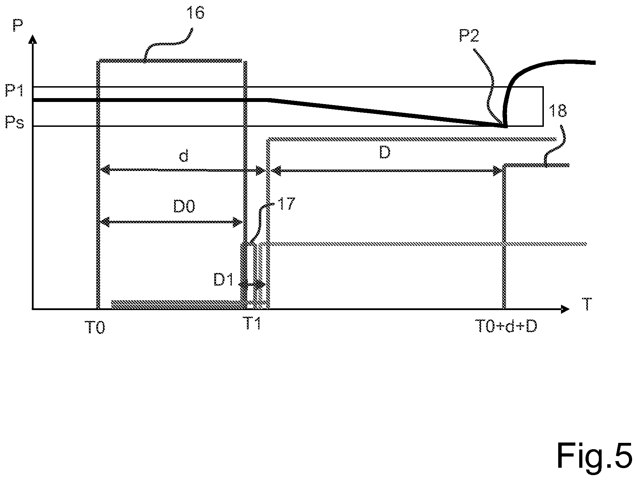

Sur la fig.5 qui illustre une troisième variante de réalisation de la présente invention, la durée d est équivalente à la durée D0 + D1, de telle sorte que le groupe moto-ventilateur 13 n'est mis en oeuvre qu'après l'allumage du moteur.

A l'instant T0 + d + D, pour les variantes illustrées sur les fig.3 et fig.5, et à l'instant T0 + d + D + D1, pour la variante illustrée sur la fig.4, l'unité de contrôle 10 commande la mise en oeuvre du capteur 11 de pression et/ou de température pour mesurer une deuxième pression P2 du fluide réfrigérant, pour vérifier que cette dernière P2 est inférieure ou égale à la pression de sécurité Ps, de telle sorte que l'unité contrôle 10 puisse mettre en oeuvre le compresseur 2 pour une étape de mise en fonctionnement 18 de la boucle de climatisation 1.

Si la deuxième pression P2 excède la pression de sécurité Ps, la boucle de climatisation 1 est mise en oeuvre soit en maintenant à l'arrêt ledit pulseur 15, soit avec une mise en oeuvre du pulseur 15 à un régime réduit procurant un débit d'air inférieur à 200 kg/h, en particulier de l'ordre de 100 à 200 kg/h. Ces dispositions visent à faire baisser la pression du fluide réfrigérant à l'intérieur de la boucle de climatisation 1, et plus particulièrement entre l'organe de détente 6 et le compresseur 2.

## Revendications

1. Méthode d'utilisation d'une boucle de climatisation (1) comprenant au moins un compresseur (2) et un refroidisseur de gaz (3) à l'intérieur desquels circule un fluide réfrigérant super-critique, le refroidisseur de gaz (3) coopérant avec au moins un groupe moto-ventilateur (13), dans laquelle à la mise en oeuvre de la boucle de climatisation, ladite méthode comprend des étapes successives consistant à :
- mesurer une première pression P1 du fluide réfrigérant à l'intérieur de la boucle de climatisation (1), puis
- comparer ladite première pression P1 à une pression de sécurité Ps, puis
- mettre en marche le groupe moto-ventilateur (13) pendant une période de durée D préalablement à une mise en marche du compresseur (2), si la première pression P1 du fluide réfrigérant est supérieure à la pression de sécurité Ps,
la mise en oeuvre de la boucle de climatisation (1) étant contrôlée par une unité de contrôle électronique (10) de mise en marche d'un moteur du véhicule, la mesure de la pression P1 étant réalisée dès que ladite unité (10) est mise sous tension électrique,
**caractérisée en ce que** la mise en marche du groupe moto-ventilateur (13) est réalisée préalablement à une mise en marche dudit moteur.

2. Méthode selon la revendication 1, **caractérisée en ce que** la mise en marche du groupe moto-ventilateur (13) est arrêtée lors de l'actionnement du démarreur dudit moteur.

3. Méthode selon la revendication 1, **caractérisée en ce que** la mise en marche du groupe moto-ventilateur (13) est maintenue postérieurement à la mise en marche dudit moteur tout en maintenant le compresseur (2) arrêté tant que ladite première pression P1 est supérieure à la pression de sécurité Ps.

4. Méthode selon l'une quelconque des revendications précédentes, **caractérisée en ce que** ladite pression de sécurité Ps est comprise entre 8 MPa et 9 MPa.

5. Méthode selon l'une quelconque des revendications précédentes, **caractérisée en ce que** la dite durée D est inférieure à 30 s.

6. Méthode selon l'une quelconque des revendications précédentes, **caractérisée en ce qu'**à l'issue de la durée D, ladite méthode comprend une étape de mesure d'une pression P2 de fluide réfrigérant à l'intérieur de la boucle de climatisation (1), la dite étape de mesure étant préalable à la mise en oeuvre de la boucle de climatisation (1), cette dernière (1) comprenant un pulseur (15) associé à un évaporateur (7).

7. Méthode selon la revendication 6, **caractérisée en ce que** si la pression P2 excède la pression de sécurité Ps, la boucle de climatisation (1) est mise en oeuvre par mise en fonctionnement du compresseur (2) tout en maintenant à l'arrêt ledit pulseur (15) pendant une durée prédéterminée.

8. Méthode selon la revendication 6, **caractérisée en ce que** si la pression P2 excède la pression de sécurité Ps, la boucle de climatisation (1) est mise en oeuvre par mise en fonctionnement du compresseur (2) avec une mise en marche du pulseur (15) à un régime réduit procurant un débit d'air inférieur à 200 kg/h.

## Patentansprüche

1. Verfahren zur Anwendung eines Klimakreislaufs (1), der wenigstens einen Kompressor (2) und einen Gaskühler (3), in denen ein überkritisches Kältefluid zirkuliert, umfasst, wobei der Gaskühler (3) mit wenigstens einer Gebläseeinheit (13) zusammenwirkt, wobei bei der Anwendung des Klimakreislaufs das Verfahren aufeinander folgende Schritte umfasst, die in Folgendem bestehen:
- Messen eines ersten Druckes P1 des Kältefluids im Inneren des Klimakreislaufs (1), anschließend
- Vergleichen des ersten Druckes P1 mit einem Sicherheitsdruck Ps, anschließend
- Inbetriebsetzen der Gebläseeinheit (13) während eines Zeitraums der Dauer D vor einer Inbetriebnahme des Kompressors (2), falls der erste Druck P1 des Kältefluids höher als der Sicherheitsdruck Ps ist,
wobei die Anwendung des Klimakreislaufs (1) von einer elektronischen Steuereinheit (10) zur Inbetriebnahme eines Motors des Fahrzeugs gesteuert wird, wobei die Messung des Druckes P1 durchgeführt wird, nachdem an die Einheit (10) eine elektrische Spannung angelegt wurde;
**dadurch gekennzeichnet, dass** die Inbetriebnahme der Gebläseeinheit (13) vor einem Anlassen des Motors durchgeführt wird.

2. Verfahren nach Anspruch 1, **dadurch gekennzeichnet, dass** die Inbetriebnahme der Gebläseeinheit (13) bei der Betätigung des Anlassers des Motors gestoppt wird.

3. Verfahren nach Anspruch 1, **dadurch gekennzeichnet, dass** die Inbetriebnahme der Gebläseeinheit (13) nach der Inbetriebnahme des Motors aufrechterhalten wird, während der Kompressor (2) ausgeschaltet gelassen wird, solange der erste Druck P1 höher als der Sicherheitsdruck Ps ist.

4. Verfahren nach einem der vorhergehenden Ansprüche, **dadurch gekennzeichnet, dass** der Sicherheitsdruck Ps zwischen 8 MPa und 9 MPa liegt.

5. Verfahren nach einem der vorhergehenden Ansprüche, **dadurch gekennzeichnet, dass** die Dauer D kürzer als 30 s ist.

6. Verfahren nach einem der vorhergehenden Ansprüche, **dadurch gekennzeichnet, dass** am Ende der Dauer D das Verfahren einen Schritt der Messung eines Druckes P2 des Kältefluids im Inneren des Klimakreislaufs (1) umfasst, wobei der Schritt der Messung der Anwendung des Klimakreislaufs (1) vorausgeht, wobei dieser Letztere (1) ein Gebläse (15) umfasst, das einem Verdampfer (7) zugeordnet ist.

7. Verfahren nach Anspruch 6, **dadurch gekennzeichnet, dass**, falls der Druck P2 den Sicherheitsdruck Ps übersteigt, der Klimakreislauf (1) durch Inbetriebnahme des Kompressors (2) in Gang gesetzt wird, während gleichzeitig das Gebläse (15) während einer vorbestimmten Dauer ausgeschaltet gelassen wird.

8. Verfahren nach Anspruch 6, **dadurch gekennzeichnet, dass**, falls der Druck P2 den Sicherheitsdruck Ps übersteigt, der Klimakreislauf (1) durch Inbetriebnahme des Kompressors (2) mit einer Inbetriebnahme des Gebläses (15) mit einer verminderten Drehzahl, die einen Luftdurchsatz von weniger als 200 kg/h bewirkt, in Gang gesetzt wird.

## Claims

1. Method for using an air-conditioning loop (1) comprising at least one compressor (2) and one gas cooler (3) inside which a supercritical refrigerant flows, the gas cooler (3) cooperating with at least one motor-fan assembly (13), in which, upon implementation of the air-conditioning loop, said method comprises a series of steps consisting in:
- measuring a first pressure P1 of the refrigerant inside the air-conditioning loop (1), then
- comparing said first pressure P1 with a safety pressure Ps, then
- operating the motor-fan assembly (13) for a time period D before switching on the compressor (2), if the first pressure P1 of the refrigerant is higher than the safety pressure Ps,
the implementation of the air-conditioning loop (1) being controlled by an electronic control unit (10) for starting an engine of the vehicle, the pressure P1 being measured as soon as said unit (10) powered up,
**characterized in that** the motor-fan assembly (13) is activated before said engine is started.

2. Method according to Claim 1, **characterized in that** the operation of the motor-fan assembly (13) is stopped when the starter of said engine is actuated.

3. Method according to Claim 1, **characterized in that** the operation of the motor-fan assembly (13) is maintained after said engine is started while keeping the compressor (2) switched off as long as said first pressure P1 is higher than the safety pressure Ps.

4. Method according to any one of the preceding claims, **characterized in that** said safety pressure Ps is between 8 MPa and 9 MPa.

5. Method according to any one of the preceding claims, **characterized in that** said time period D is less than 30 seconds.

6. Method according to any one of the preceding claims, **characterized in that**, at the end of the time period D, said method comprises a step of measuring a refrigerant pressure P2 inside the air-conditioning loop (1), said measurement step being performed prior to the implementation of the air-conditioning loop (1), the latter (1) comprising a blower (15) associated with an evaporator (7) .

7. Method according to Claim 6, **characterized in that**, if the pressure P2 exceeds the safety pressure Ps, the air-conditioning loop (1) is implemented by running the compressor (2) while keeping said blower (15) deactivated for a predetermined time period.

8. Method according to Claim 6, **characterized in that**, if the pressure P2 exceeds the safety pressure Ps, the air-conditioning loop (1) is implemented by running the compressor (2) with the blower (15) operating at a reduced speed providing an air flow rate of less than 200 kg/hr.
